# FASCICULE DE BREVET EUROPEEN

(11) **EP 2 537 670 B1**
(45) Date de publication et mention de la délivrance du brevet: **30.04.2014**
(21) Numéro de dépôt: 12169145.5
(22) Date de dépôt: 23.05.2012
(51) Int. Cl.: B32B 3/10, B32B 3/20, B32B 3/12, B32B 3/08

(54) **Âme de matériau structural à base de profilés, matériau structural et procédé de fabrication**
Strukturmaterialkern auf Profilbasis, Strukturmaterial und Herstellungsverfahren
Structural material core made up of profile sections, structural material and manufacturing method

(30) Priorité: 23.06.2011 FR 1155570
(43) Date de publication de la demande: 26.12.2012
(73) Titulaire: Brun, Frédéric, 14000 Caen (FR); Chermant, Alexis, 14640 Auberville (FR)
(72) Inventeur: BRUN, Frédéric, 14000 CAEN (FR)
(74) Mandataire: Cabinet Plasseraud

(56) Documents cités:
- WO-A1-2008/082093
- WO-A2-2005/014216
- FR-A1- 2 922 476
- US-A- 5 040 966
- US-A1- 2009 286 100
- US-A1- 2010 323 181
- US-B1- 6 207 256

## Description

La présente invention est relative aux âmes de matériaux structuraux, aux matériaux structuraux comportant une telle âme et aux procédés permettant de fabriquer une telle âme.

Les matériaux structuraux sandwich sont généralement composés de deux peaux externes solidarisées sur les faces opposées d'une âme. Ladite âme peut être réalisée dans une grande variété de matières constitutives et est faite de telle sorte qu'elle possède une forte résistance structurale à la compression et à la flexion tout en conservant un poids minimal. Ces matériaux structuraux possèdent de nombreuses applications par exemple dans le domaine de l'aéronautique ou de l'automobile.

Parmi ces matériaux, les plus connus sont ceux comportant une âme en nid d'abeille. Ces âmes sont constituées de feuilles mises en forme puis fixées ensemble à des points précis pour constituer un réseau d'alvéoles de profil hexagonal, parfois déformé, qui s'étendent perpendiculairement audites peaux externes. De nombreux matériaux peuvent être utilisés pour la réalisation de cette âme, par exemple du carton, de l'aluminium, du plastique, des matières composites ou des métaux.

Les feuilles constituant l'âme de matériau structural étant disposées orthogonalement à la surface du sandwich et leur structure étant développable, les caractéristiques mécaniques des âmes en nid d'abeille sont donc fortement anisotropes. Celles-ci présentent, par exemple, une résistance moins bonne à la flexion qu'à la compression. Différentes structures ont été développées pour tenter de remédier à cet inconvénient.

### ARRIÈRE PLAN TECHNOLOGIQUE

Le document FR-A-2 922476 décrit un exemple d'une telle structure constituée d'un empilement de feuilles munies sur leurs faces d'une pluralité de nervures parallèles, lesdites nervures étant complémentaires d'une feuille à l'autre. L'empilement de ces feuilles constitue une structure non-développable présentant une amélioration de la rigidité en flexion et en compression.

Le document WO 2005/014216 décrit un exemple de matériau structurel sandwich comportant une âme constituée d'un treillis tridimensionnel.

### OBJETS DE L'INVENTION

La présente invention a pour but de proposer un matériau et une structure d'âme présentant de meilleures caractéristiques de résistance tout en possédant un poids plus faible et constituant une alternative économiquement viable aux solutions connues.

A cet effet, selon l'invention, une âme de matériau structural sandwich du genre en question s'étendant sensiblement selon des directions d'extension X, Y et destinées à être comprise entre une surface inférieure et une surface supérieure, opposées selon une direction d'épaisseur Z, comprend un réseau périodique tridimensionnel de canaux tubulaires creux (4) reliés entre eux, chaque canal étant défini par des faces latérales s'étendant suivant une direction de canal (4c) d'une extrémité inférieure (4a) à une extrémité supérieure (4b), situées respectivement au niveau des surfaces inférieure (2) et supérieure (3) de ladite âme, ledit réseau comprenant au moins trois canaux (4, 5, 6) dont les directions de canal (4c, 5c, 6c) ne sont pas coplanaires, et est caractérisée en ce que le réseau périodique tridimensionnel de canaux tubulaires creux (4) ne présente pas de points de concentration des extrémités de canaux au niveau des surfaces inférieure (2) et supérieure (3).

Chacun des canaux possède une rigidité importante en compression suivant sa direction de canal. Le caractère tridimensionnel du réseau de canaux, lié à la présence d'au moins trois canaux dont les directions de canal ne sont pas coplanaires, confère donc au matériau structural une résistance mécanique importante dans toutes les directions de l'espace. Le matériau possède ainsi une rigidité importante tant en flexion qu'en compression. Le réseau de canaux ne présentant pas de point de concentration des extrémités de canaux au niveau des surfaces inférieure et supérieure, la répartition des efforts exercés sur les surfaces supérieure et inférieure est uniforme, ce qui améliore les caractéristiques mécaniques du matériau structural. De plus, l'âme de matériau structural selon l'invention présente de très bonnes propriétés en tant qu'absorbeur d'énergie, par exemple lors de chocs. Enfin, les canaux creux permettent le passage de câbles ainsi que l'installation aisée de capteurs ou de jauges physiques. De façon avantageuse, aucune paire de directions de canal ne s'intersecte entre les surfaces inférieure et supérieure de l'âme de matériau structural sandwich.

Les extrémités inférieures et supérieures des canaux tubulaires creux peuvent être réparties de façon uniforme au niveau des surfaces inférieure et supérieure.

Chaque canal tubulaire creux peut présenter au moins une extrémité ouverte parmi son extrémité inférieure et son extrémité supérieure.

Avantageusement, les canaux tubulaires creux présentent une section de canal polygonale, prise transversalement à la direction de canal.

Les faces latérales des canaux tubulaires creux peuvent s'étendre de façon planaire depuis l'extrémité inférieure jusqu'à l'extrémité supérieure.

Afin d'obtenir des propriétés mécaniques encore plus importantes, les canaux tubulaires creux comporteront des nervures qui s'étendent longitudinalement depuis leur extrémité inférieure jusqu'à leur extrémité supérieure.

Suivant un mode de réalisation de l'invention, l'âme de l'invention peut être munie en outre d'une pluralité de structures planes supérieures au niveau de sa surface supérieure ainsi qu'une pluralité de structures planes inférieures au niveau de sa surface inférieure. Les extrémités des canaux tubulaires creux sont reliées entre elles par groupe de trois ou de quatre au moyen desdites structures planes, un agencement en quinconce des structures planes supérieures et inférieures permettant de relier chaque canal tubulaire creux à des canaux voisins différents à ses extrémités supérieures et inférieures. Ceci permet de constituer un réseau solide et léger de canaux en minimisant la quantité et le poids des structures de liaison.

Une âme conforme à la présente invention peut aisément être munie d'au moins une peau externe fixée sur au moins l'une de ses faces opposées pour constituer un matériau structural sandwich.

L'invention a également pour objet un procédé de fabrication d'une âme de matériau structural sandwich s'étendant sensiblement selon des directions d'extension et étant destinée à être comprise entre une surface inférieure et une surface supérieure, opposées selon une direction d'épaisseur, le procédé comprenant au moins l'étape de relier des canaux tubulaires creux entre eux pour former un réseau périodique tridimensionnel de canaux tubulaires creux comprenant au moins trois canaux définis par des faces latérales s'étendant suivant une direction de canal d'une extrémité inférieure à une extrémité supérieure, lesdites extrémités étant situées respectivement au niveau des surfaces inférieure et supérieure de ladite âme, les directions de canal desdits canaux n'étant pas coplanaires, le réseau périodique tridimensionnel de canaux tubulaires creux ne présentant pas de points de concentration des extrémités de canaux au niveau des surfaces inférieure et supérieure.

Selon un mode de réalisation du procédé précédent, ledit procédé comprendra en outre l'étape de former lesdits canaux tubulaires creux par découpe de tronçons d'un tube longitudinal creux de section constante tandis que l'étape de relier comprendra l'une et/ou l'autre des opérations suivantes :
- une étape de fixation desdits tronçons entre eux au niveau de leurs extrémités supérieures et/ou de leurs extrémités inférieures au moyen de structures planes ;
- une étape de fixation desdits tronçons entre eux au niveau de leurs faces latérales s'étendant d'une extrémité à l'autre desdits tronçons.

Selon encore un autre mode de réalisation du procédé précédent, l'étape de relier pourra comprendre une étape d'injection ou de moulage dudit réseau de canaux tubulaires creux dans un moule.

Enfin, l'invention a également pour objet un procédé pour la réalisation d'un matériau structural sandwich comprenant les étapes de réaliser une âme selon l'un des procédés de la présente invention puis de la munir d'au moins une peau externe sur au moins l'une de ses surfaces.

D'une manière générale, certains modes de réalisation de l'invention présentent les avantages suivants. Le procédé de fabrication est facilement industrialisable car les étapes sont simples à mettre en oeuvre en utilisant des moyens techniques existants. Les canaux peuvent être produits à bas coût et en grandes quantités. L'âme de matériau structural sandwich peut être d'épaisseur et de dimensions arbitraires. La rigidité mécanique du matériau que ce soit en flexion ou en compression ne dépend que du réseau tubulaire creux, l'âme de matériau structural sandwich peut donc être allégée de façon importante. Enfin le réseau tubulaire étant tridimensionnel, la résistance mécanique du matériau est beaucoup plus élevée, à masse volumique égale, que celle des matériaux de type nid d'abeille.

### BRÈVE DESCRIPTION DES DESSINS

D'autres caractéristiques et avantages de l'invention apparaîtront au cours de la description suivante.

Sur les dessins :
- la figure 1a est une vue en perspective de l'âme de matériau structural selon un premier mode de réalisation.
- la figure 1b est une vue de dessus de l'âme de la figure 1a.
- les figures 2a et 2b présentent deux variantes de ce premier mode de réalisation.
- la figure 3a représente un groupe de quatre canaux extrait de l'âme de matériau structural selon un second mode de réalisation.
- les figures 3b et 3c présentent une âme de matériau structural selon ce second mode de réalisation.
- la figure 3d illustre une variante de ce second mode de réalisation.

Sur les différentes figures, les mêmes références désignent des éléments identiques ou similaires.

### DESCRIPTION DÉTAILLÉE

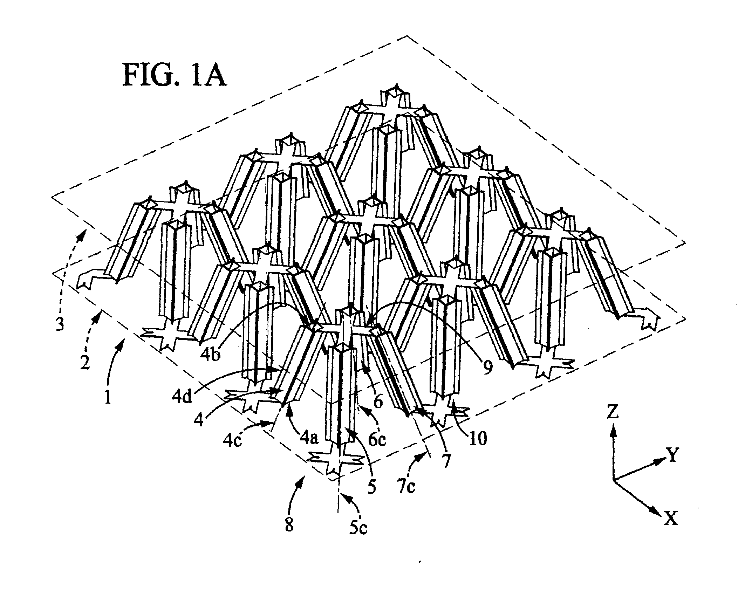

La figure 1a présente une âme de matériau structural selon un premier mode de réalisation de la présente invention. Cette âme 1 s'étend dans des directions d'extension X et Y et est comprise entre une surface inférieure 2 et une surface supérieure 3, opposées suivant une direction d'épaisseur Z. Les surfaces inférieure 2 et supérieure 3 sont des surfaces géométrique de l'espace qui ne sont pas matérialisée par de la matière dans ce mode de réalisation. L'âme 1 comprend un réseau périodique tridimensionnel de canaux tubulaires creux 4.

Chaque canal tubulaire creux 4 s'étend d'une extrémité inférieure 4a à une extrémité supérieure 4b en suivant une direction de canal 4c. Les canaux possèdent une section carrée, prise transversalement à ladite direction de canal. Ils présentent des nervures extérieures 4d, situées au niveau des sommets de ladite section carrée et dans le prolongement de ses diagonales, qui s'étendent longitudinalement depuis l'extrémité inférieure 4a jusqu'à l'extrémité supérieure 4b.

Les extrémités supérieures et inférieures des canaux creux sont situées respectivement au niveau des surfaces supérieures et inférieures de l'âme de matériau structural.

Au moins l'une des extrémités supérieure et inférieure de chaque canal tubulaire creux est avantageusement ouverte.

Les canaux sont définis par des faces latérales qui s'étendent depuis leur extrémité inférieure jusqu'à leur extrémité supérieure.

Les faces latérales des canaux sont avantageusement planaires, c'est-à-dire s'étendent chacune sensiblement suivant un plan.

Dans une variante de ce mode de réalisation, les canaux tubulaires creux 4 peuvent être plus généralement de forme cylindrique, par exemple de forme cylindrique de révolution.

Les canaux tubulaires creux 4 peuvent ainsi avoir une section, prise transversalement à leur direction de canal, de forme circulaire, ovale, ou toute autre forme choisie par l'homme du métier.

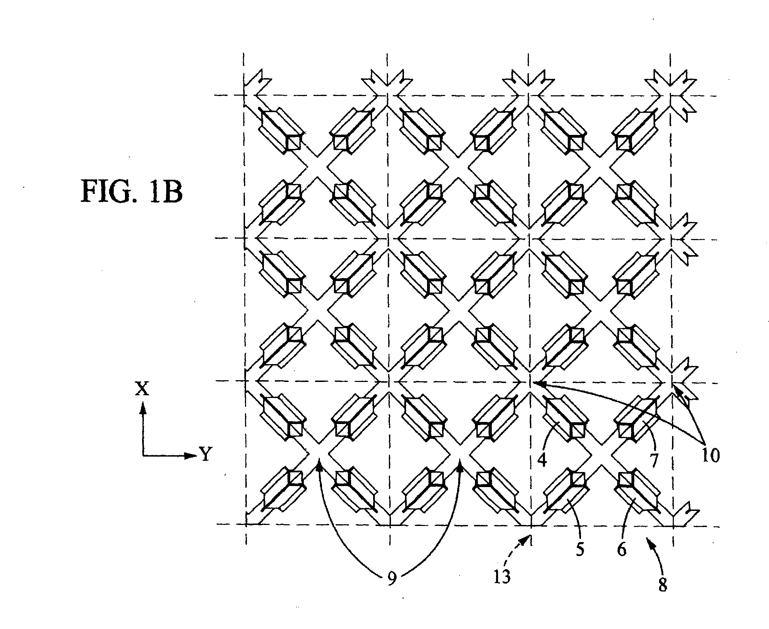

Les canaux sont disposés par groupes 8 de quatre canaux 4, 5, 6, 7, lesdits groupes 8 formant un réseau périodique 13 présenté en pointillés sur la figure 1b. Au sein de chaque groupe 8, les directions de canal 4c, 5c, 6c, 7c des canaux 4, 5, 6, 7 forment les arêtes d'une pyramide convergeant au-dessus de la surface supérieure 3. Les canaux d'un groupe 8 sont reliés entre eux au niveau de leurs extrémités supérieures par une structure plane supérieure 9 en forme de croix, située au niveau de la surface supérieure 3. Les groupes 8 sont disposés sur la surface inférieure 2 pour former un réseau carré 13 et sont orientés de façon à ce que les extrémités inférieures des canaux de chaque groupe se trouvent localisées aux sommets des carrés constituant ledit réseau.

La surface inférieure 2 de l'âme 1 présente une disposition des extrémités de canaux analogue à la disposition de la surface supérieure 3, symétrique par rapport au plan d'extension (X, Y). Plus précisément, à l'extrémité inférieure de chaque canal formant le groupe 8, une structure plane inférieure 10 en forme de croix, située au niveau de la surface inférieure 2, permet de relier ledit canal aux trois canaux dont les extrémités inférieures sont les plus proches, chacun de ces quatre canaux appartenant donc à un groupe 8 différent. De cette façon, chaque groupe de canaux se trouve relié aux huit groupes voisins du réseau carré 13 par les structures inférieures reliant les extrémités inférieures des canaux. Les structures planes supérieures et inférieures sont ainsi agencées en quinconce et relient chaque canal tubulaire creux à des canaux voisins différents à ses extrémités supérieures et inférieures, ceci permettant de constituer le réseau périodique tridimensionnel de canaux en minimisant la quantité et le poids des structures de liaison.

Chaque canal 4 présente une forte résistance à la compression dans sa direction de canal 4c. Le réseau de canaux constituant l'âme comprenant des canaux, par exemple 4, 5, 6, dont les directions de canal 4c, 5c, 6c ne sont pas coplanaires, ledit réseau est donc tridimensionnel. Ceci confère à l'âme des propriétés mécaniques particulièrement intéressantes.

De façon avantageuse, aucune paire de directions de canal 4c ne s'intersecte entre les surfaces inférieure 2 et supérieure 3 de l'âme de matériau structural sandwich.

En outre, le réseau périodique tridimensionnel de canaux tubulaires creux 4 ne présente pas de points de concentration des extrémités de canaux au niveau des surfaces inférieure 2 et supérieure 3.

Un point de concentration est défini comme étant une zone dans laquelle deux canaux tubulaires 4 s'interpénètrent au moins partiellement.

Ainsi par exemple, une zone dans laquelle deux canaux tubulaires 4 se croisent est un point de concentration.

Un point de concentration ou zone d'interpénétration peut également se trouver au niveau d'une extrémité d'un canal tubulaire 4, voir au niveau d'une extrémité respective de plusieurs canaux tubulaires 4 du point de concentration.

Ainsi, un noeud entre plusieurs canaux tubulaires 4 ou un angle entre deux canaux tubulaires 4 est également un point de concentration.

Les extrémités respectivement supérieure 4b et inférieure 4a des canaux tubulaires creux 4 peuvent ainsi être réparties de façon uniforme respectivement au niveau des surfaces inférieure 2 et supérieure 3 de l'âme de matériau structural sandwich.

De cette façon, l'âme de matériau structural ne présente aucun noeud, angle ou interpénétration de canaux tubulaires creux ce qui augmente sa résistance mécanique.

En outre, la répartition des efforts exercés sur les surfaces supérieure et inférieure de l'âme de matériau structural sandwich est optimale.

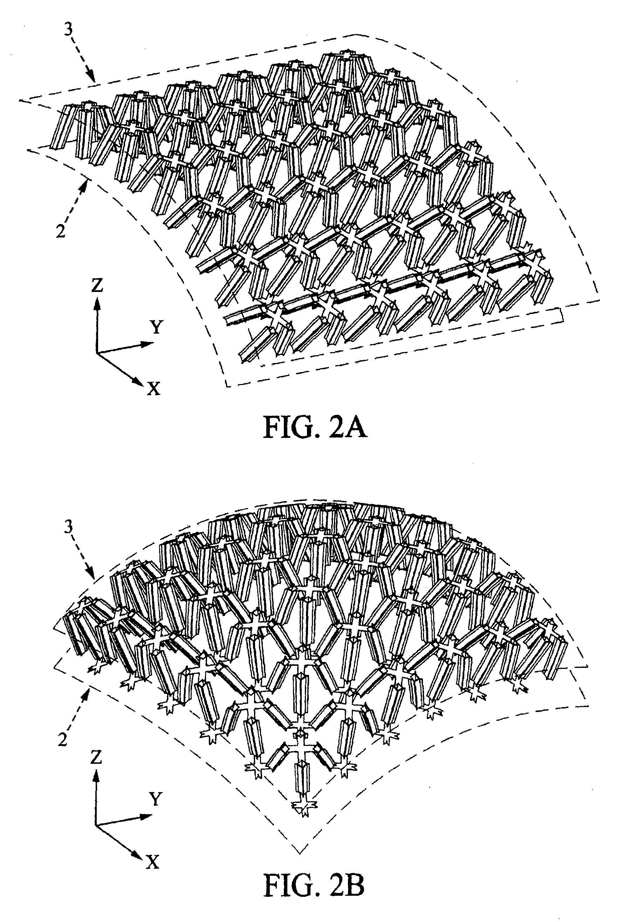

Selon des variantes de ce premier mode de réalisation, indiquées figures 2a et 2b, les surfaces inférieure 2 et supérieure 3 de l'âme de matériau structural pourront ne pas être plane. Sur la figure 2a, lesdites surfaces sont par exemple courbées suivant une direction Y, comme des portions de cylindres. Sur la figure 2b, elles sont courbées suivant les directions X et Y, comme des portions de sphères. Il suffit pour cela d'assembler les canaux à une peau au niveau de la surface supérieure, sans avoir utilisé les surfaces inférieures, de donner la forme souhaitée à la peau, et d'assembler ensuite les structures planes inférieures. Le réseau de canaux étant toujours disposé entre lesdites surfaces, on pourra constituer un matériau structural de géométrie complexe sans employer de matériaux contraints et en conservant donc de bonnes propriétés mécaniques.

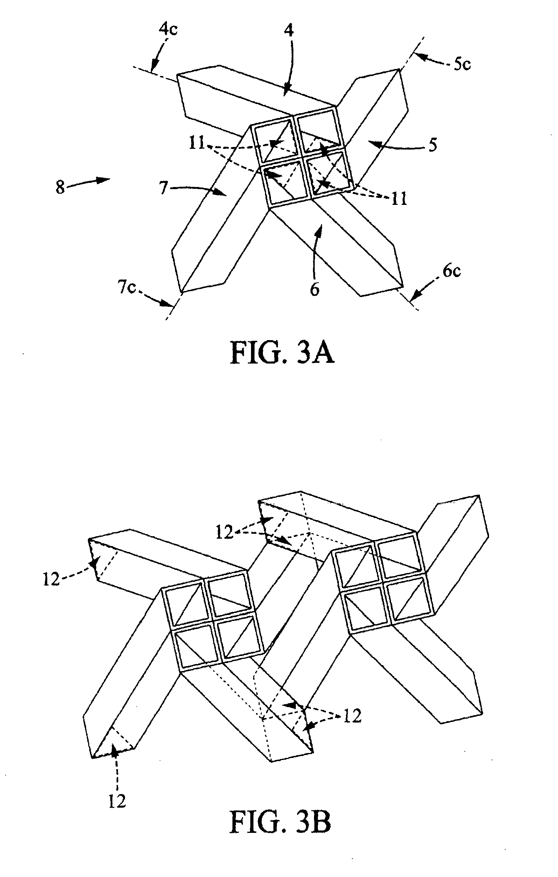

Selon un second mode de réalisation indiqué figure 3a, les canaux 4 possèdent une section carrée dépourvue de nervures et présentent donc quatre faces latérales qui s'étendent depuis leur extrémité inférieure 4a jusqu'à leur extrémité supérieure 4b. Les canaux sont disposés par groupes 8 de quatre canaux 4, 5, 6, 7 de la façon suivante :
- les extrémités supérieures carrées 4b, 5b, 6b, 7b des quatre canaux sont juxtaposées deux à deux pour former un carré de plus grande taille au niveau de la surface supérieure 3;
- les directions de canal 4c, 5c, 6c, 7c des quatre canaux constituent les arêtes d'une pyramide vrillée dont le sommet est au-dessus de la surface supérieure 3 et s'étendent donc suivant quatre directions distinctes et non-coplanaires ; enfin
- chacun des canaux du groupe 8 se trouvant donc en contact avec deux autres canaux du même groupe 8 au travers de deux zones supérieures 11 situées respectivement sur deux de ses faces latérales à proximité de son extrémité supérieure, les quatre canaux du groupe 8 peuvent alors être reliés entre eux par adhésion deux à deux au niveau desdites zones supérieures 11.

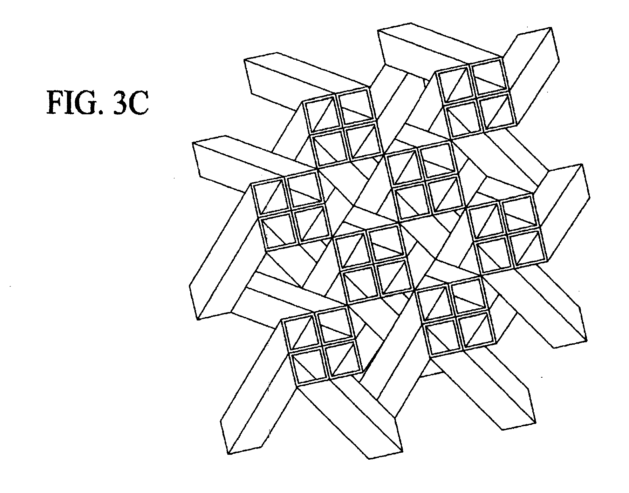

Une disposition identique, symétrique par rapport au plan (X, Y), au niveau de la surface inférieure 2 permet de relier les différents groupes 8 entre eux. Les extrémités inférieures des canaux sont regroupées ensembles par quatre canaux, chacun desdits quatre canaux appartenant à un groupe 8 différent. Lesdits quatre canaux sont reliés entre eux par adhésion au niveau de zones inférieures 12 de leurs faces latérales situées à proximité de leurs extrémités inférieures comme indiqué sur la figure 3b. Chaque canal d'un groupe est donc relié à trois canaux appartenant à trois groupes 8 différents, pour constituer le réseau périodique tridimensionnel de canaux constituant l'âme qui est présenté sur la figure 3c.

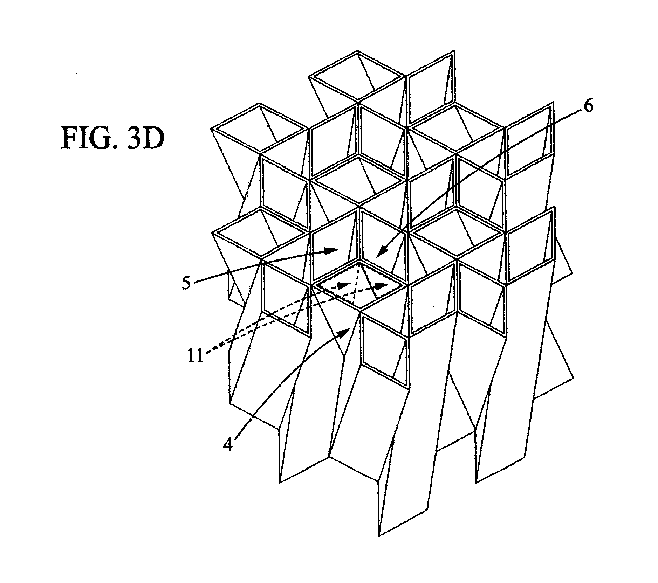

Dans une variante de ce deuxième mode de réalisation, indiquée figure 3d, les canaux possèdent une section en losange, toujours dépourvue de nervures, et sont agencés par groupes de trois canaux 4, 5, 6. Les sections en losange des canaux sont telles que les extrémités supérieures desdits canaux, assemblés ensembles au sein d'un groupe, constituent un hexagone régulier, chaque canal étant relié aux deux autres canaux du groupe sur deux de ses faces latérales. Comme dans le mode de réalisation précédent, les trois canaux sont assemblés au sein du groupe par adhésion au niveau de zones supérieures 11 de leurs faces latérales situées à proximité de leurs extrémités supérieures.

La surface inférieure de l'âme présente une disposition identique à la surface supérieure, symétrique par rapport au plan (X, Y), dans laquelle les différents groupes sont reliés entre eux par adhésion au niveau de zones inférieures 12 de leurs faces latérales situées à proximité de leurs extrémités inférieures, chaque canal d'un groupe étant relié à deux canaux appartenant à deux groupes différents, l'ensemble des canaux constituant le réseau périodique tridimensionnel de canaux.

La paroi des canaux tubulaires creux pourra être réalisée dans un matériau comme par exemple un plastique, un métal, un alliage, un matériau composite ou une résine. L'épaisseur du matériau constituant ladite paroi pourra aller de 5 micromètres à 2 millimètres.

L'âme de matériau structural de la présente invention peut être fabriquée par différents moyens.

Selon un premier mode de réalisation du procédé de fabrication, l'âme 1 est réalisée en une seule étape 200 par une technique d'injection ou une autre technique de moulage du réseau périodique de canaux dans un moule. L'âme 1 obtenue par moulage peut être fabriquée en grande série.

Dans un second mode de réalisation du procédé de fabrication, l'âme 1 selon la présente invention est réalisée en plusieurs étapes. Une première étape 100 consiste à produire en grande quantité des tubes ou profilés longitudinaux creux de section constante, par pultrusion ou toute autre technique permettant la production de tels tubes en grande quantité et à faible coût, avant de découper lesdits tubes pour donner des tronçons. L'étape 200 consiste ensuite à relier ces tronçons entre eux par un moyen qui peut être par exemple choisi parmi :
- fixer par adhésion, collage, soudage, assemblage, ou tout autre moyen de fixation, des structures planes 9, 10 sur les faces inférieure 2 et supérieure 3 de l'âme pour relier les tronçons entre eux au niveau de leurs extrémités inférieures et supérieures,
- fixer par adhésion, collage, soudage, assemblage, ou tout autre moyen de fixation, les tronçons entre eux au niveau des zones supérieures 11 et inférieures 12 de leurs faces latérales.

Chaque tronçon forme alors un canal tubulaire creux 4.

Pour obtenir un matériau structural sandwich, on pourra au cours d'une étape 300 fabriquer une âme de matériau structural puis, au cours d'une étape 400, fixer une ou des peaux externes sur l'une et/ou l'autre des surfaces ou faces inférieure et supérieure de ladite âme. Ces peaux sont par exemple formées en matière composite d'un plastique renforcé par des fibres. Pour diminuer le coût, de l'étape 300 en particulier, il sera intéressant dans un mode de réalisation du procédé ci-dessus de produire en série des âmes de dimensions standardisées par une des méthodes détaillée plus haut puis d'assembler ces âmes ensembles, avant ou après les avoir découpées au dimensions voulues, afin d'obtenir un matériau de dimensions arbitraires dans les trois directions de l'espace. À nouveau, l'étape 400 permettra de munir cette âme d'une ou plusieurs peaux pour en faire un matériau structural sandwich.

## Revendications

1. Âme de matériau structural sandwich s'étendant sensiblement selon des directions d'extension (X, Y) et étant destinée à être comprise entre une surface inférieure (2) et une surface supérieure (3), opposées selon une direction d'épaisseur (Z), l'âme comprenant un réseau périodique tridimensionnel de canaux tubulaires creux (4) reliés entre eux, chaque canal étant défini par des faces latérales s'étendant suivant une direction de canal (4c) d'une extrémité inférieure (4a) à une extrémité supérieure (4b), situées respectivement au niveau des surfaces inférieure (2) et supérieure (3) de ladite âme, ledit réseau comprenant au moins trois canaux (4, 5, 6) dont les directions de canal (4c, 5c, 6c) ne sont pas coplanaires, l'âme de matériau structural sandwich étant **caractérisée en ce que** le réseau périodique tridimensionnel de canaux tubulaires creux (4) ne présente pas de zone d'interpénétration des extrémités de canaux (4a, 4b) au niveau des surfaces inférieure (2) et supérieure (3) de l'âme.

2. Âme selon la revendication 1, dans laquelle aucune paire de directions de canal (4c) ne s'intersecte entre les surfaces inférieure (2) et supérieure (3) de l'âme de matériau structural sandwich

3. Âme selon l'une quelconque des revendications précédentes dans laquelle les extrémités inférieures (4a) et supérieures (4b) des canaux tubulaires creux (4) sont réparties de façon uniforme au niveau des surfaces inférieure (2) et supérieure (3).

4. Âme selon l'une quelconque des revendications précédentes dans laquelle chaque canal tubulaire creux (4) présente au moins une extrémité ouverte parmi son extrémité inférieure (4a) et son extrémité supérieure (4b).

5. Âme selon l'une quelconque des revendications précédentes dans laquelle les canaux tubulaires creux (4) présentent une section de canal polygonale, prise transversalement à la direction de canal (4c).

6. Âme selon l'une quelconque des revendications précédentes dans laquelle les faces latérales de chaque canal tubulaire creux (4) s'étendent de façon planaire depuis l'extrémité inférieure (4a) jusqu'à l'extrémité supérieure (4b) dudit canal.

7. Âme selon l'une quelconque des revendications précédentes dans laquelle les canaux tubulaires creux (4) comportent des nervures (4d) qui s'étendent longitudinalement depuis leur extrémité inférieure (4a) jusqu'à leur extrémité supérieure (4b).

8. Âme selon l'une quelconque des revendications précédentes comprenant en outre une pluralité de structures planes supérieures (9) au niveau de sa surface supérieure (3) ainsi qu'une pluralité de structures planes inférieures (10) au niveau de sa surface inférieure (2), dans laquelle les extrémités des canaux tubulaires creux sont reliées entre elles par groupes (8) de trois ou de quatre au moyen desdites structures planes, un agencement en quinconce des structures planes supérieures (9) et inférieures (10) permettant de relier chaque canal tubulaire creux (4) à des canaux voisins différents à ses extrémités supérieures (4b) et inférieures (4a).

9. Matériau structural sandwich **caractérisé en ce qu'**il comporte une âme selon l'une quelconque des revendications précédentes et au moins une peau externe fixée sur au moins l'une des surfaces de ladite âme.

10. Procédé de fabrication d'une âme de matériau structural sandwich s'étendant sensiblement selon des directions d'extension (X, Y) et étant destinée à être comprise entre une surface inférieure (2) et une surface supérieure (3), opposées selon une direction d'épaisseur (Z), le procédé étant **caractérisé en ce qu'**il comprend au moins l'étape (200) suivante :
Relier des canaux tubulaires creux (4) entre eux pour former un réseau périodique tridimensionnel de canaux tubulaires creux (4) comprenant au moins trois canaux (4, 5, 6) définis par des faces latérales s'étendant suivant une direction de canal (4c, 5c, 6c) d'une extrémité inférieure (4a, 5a, 6a) à une extrémité supérieure (4b, 5b, 6b), lesdites extrémités étant situées respectivement au niveau des surfaces inférieure (2) et supérieure (3) de ladite âme, les directions de canal (4c, 5c, 6c) desdits canaux n'étant pas coplanaires, le réseau périodique tridimensionnel de canaux tubulaires creux (4) ne présentant pas de zone d'interpénétration des extrémités de canaux au niveau des surfaces inférieure (2) et supérieure (3) .

11. Procédé selon la revendication 10 dans lequel l'étape (200) de relier comprends une étape d'injection ou de moulage dudit réseau de canaux tubulaires creux dans un moule.

12. Procédé selon la revendication 10 comprenant en outre l'étape (100) de former lesdits canaux tubulaires creux (4) par découpe de tronçons d'un tube longitudinal creux de section constante, et dans lequel l'étape (200) de relier comprend l'une et/ou l'autre des opérations suivantes :
- une étape de fixation desdits tronçons entre eux au niveau de leurs extrémités supérieures et/ou de leurs extrémités inférieures au moyen de structures planes ;
- une étape de fixation desdits tronçons entre eux au niveau de leurs faces latérales situées entre les extrémités desdits tronçons.

13. Procédé de fabrication d'un matériau structural sandwich **caractérisé en ce qu'**il comprend au moins les étapes suivantes :
- une étape (300) consistant à fabriquer une âme de matériau structural sandwich à partir d'une âme obtenue ou des âmes obtenues au moyen d'un procédé selon l'une des revendications 10, 11 ou 12; et
- une étape (400) consistant à munir l'âme obtenue à l'étape précédente de peaux externes fixées sur les surfaces inférieures et supérieures de ladite âme pour obtenir un matériau structural sandwich.

## Patentansprüche

1. Kern eines Sandwich-Struktur-Materials, der sich im Wesentlichen entlang von Erstreckungsrichtungen (X, Y) erstreckt und dazu bestimmt ist, zwischen einer unteren Fläche (2) und einer oberen Fläche (3), die einander in einer Dicken-Richtung (Z) gegenüber liegen, enthalten zu sein, wobei der Kern ein dreidimensionales periodisches Gitter aus miteinander verbundenen, rohrförmigen, hohlen Kanälen (4) umfasst, wobei jeder Kanal durch Seitenflächen definiert ist, die sich, einer Kanal-Richtung (4c) folgend, von einem unteren Ende (4a) zu einem oberen Ende (4b) erstrecken, welche auf Höhe der unteren (2) bzw. oberen (3) Fläche von dem Kern gelegen sind, wobei das Gitter wenigstens drei Kanäle (4, 5, 6) umfasst, deren Kanal-Richtungen (4c, 5c, 6c) nicht komplanar sind, wobei der Kern des Sandwich-Struktur-Materials **dadurch gekennzeichnet ist, dass** das dreidimensionale periodische Gitter aus hohlen rohrförmigen Kanälen (4) keinen Bereich gegenseitigen Eindringens ineinander der Enden der Kanäle (4a, 4b) auf Höhe der unteren Fläche (2) und oberen Fläche (3) des Kerns aufweist.

2. Kern nach Anspruch 1, wobei kein Paar von Kanal-Richtungen (4c) sich zwischen der unteren Fläche (2) und der oberen Fläche (3) des Kerns des Sandwich-Struktur-Materials schneidet.

3. Kern nach einem der vorhergehenden Ansprüche, wobei die unteren Enden (4a) und die oberen Enden (4b) der hohlen rohrförmigen Kanäle (4) auf Höhe der unteren Fläche (2) und der oberen Fläche (3) gleichmäßig verteilt sind.

4. Kern nach einem der vorhergehenden Ansprüche, wobei für jeden hohlen rohrförmigen Kanal (4) wenigstens eines von seinem unteren Ende (4a) und seinem oberen Ende (4b) ein offenes Ende ist.

5. Kern nach einem der vorhergehenden Ansprüche, wobei die hohlen rohrförmigen Kanäle (4) einen Kanal-Querschnitt, genommen transversal zu der Kanal-Richtung (4c), mit Polygon-Form aufweisen.

6. Kern nach einem der vorhergehenden Ansprüche, wobei die Seitenflächen von jedem hohlen rohrförmigen Kanal (4) sich planar von dem unteren Ende (4a) bis zu dem oberen Ende (4b) des Kanals erstrecken.

7. Kern nach einem der vorhergehenden Ansprüche, wobei die hohlen rohrförmigen Kanäle (4) Rippen (4d) umfassen, die sich longitudinal von ihrem unteren Ende (4a) bis zu ihrem oberen Ende (4b) erstrecken.

8. Kern nach einem der vorhergehenden Ansprüche, weiter umfassend eine Mehrzahl von oberen planaren Strukturen (9) auf Höhe von seiner oberen Fläche (3) sowie eine Mehrzahl von unteren planaren Strukturen (10) auf Höhe von seiner unteren Fläche (2), wobei die Enden der hohlen rohrförmigen Kanäle in Gruppen (8) von drei oder vier vermittels der planaren Strukturen miteinander verbunden sind, wobei eine versetzte Anordnung der oberen (9) und unteren (8) planaren Strukturen es ermöglicht, jeden hohlen rohrförmigen Kanal (4) an seinem oberen Ende (4b) und seinem unteren Ende (4a) mit verschiedenen benachbarten Kanälen zu verbinden.

9. Sandwich-Struktur-Material, **dadurch gekennzeichnet, dass** es einen Kern nach einem der vorhergehenden Ansprüche und wenigstens eine Außenhaut umfasst, die an wenigstens einer der Flächen von dem Kern befestigt ist.

10. Verfahren zur Herstellung von einem Kern eines Sandwich-Struktur-Materials, der sich im Wesentlichen entlang von Erstreckungsrichtungen (X, Y) erstreckt und dazu bestimmt ist, zwischen einer unteren Fläche (2) und einer oberen Fläche (3) enthalten zu sein, die einander entlang einer Dicken-Richtung (Z) gegenüber liegen, wobei das Verfahren d**adurch gekennzeichnet ist, dass** es wenigstens den folgenden Schritt (200) umfasst:
Verbinden von hohlen rohrförmigen Kanälen (4) miteinander, um ein dreidimensionales periodisches Gitter aus hohlen rohrförmigen Kanälen (4) zu bilden, welches wenigstens drei Kanäle (4, 5, 6) umfasst, die durch Seitenflächen definiert sind, die sich entlang einer Kanal-Richtung (4c, 5c, 6c) von einem unteren Ende (4a, 5a, 6a) zu einem oberen Ende (4b, 5b, 6b) erstrecken, wobei die Enden auf Höhe der unteren Fläche (2) bzw. der oberen Fläche (3) des Kerns gelegen sind, wobei die Kanal-Richtungen (4c, 5c, 6c) der Kanäle nicht komplanar sind, wobei das periodische dreidimensionale Gitter aus hohlen rohrförmigen Kanälen (4) keinen Bereich gegenseitigen Eindringens ineinander der Enden der Kanäle auf Höhe der unteren Fläche (2) und der oberen Fläche (3) aufweist.

11. Verfahren nach Anspruch 10, wobei der Schritt (200) des Verbindens einen Schritt umfasst, bei dem das Gitter aus hohlen rohrförmigen Kanälen in eine Form eingespritzt oder in dieser geformt wird.

12. Verfahren nach Anspruch 10, weiter umfassend den Schritt (100), die hohlen rohrförmigen Kanäle (4) zu bilden, indem Abschnitte von einem hohlen longitudinalen Rohr mit konstantem Querschnitt geschnitten werden, und wobei der Schritt (200) des Verbindens den einen oder anderen der folgenden Vorgänge umfasst:
- einen Schritt, bei dem die Abschnitte auf Höhe ihrer oberen Enden oder/und ihrer unteren Enden vermittels planarer Strukturen aneinander fixiert werden,
- einen Schritt, bei dem die Abschnitte auf Höhe ihrer Seitenflächen, die zwischen den Enden der Abschnitte gelegen sind, aneinander fixiert werden.

13. Verfahren zur Herstellung eines Sandwich-Struktur-Materials, **dadurch gekennzeichnet, dass** es wenigstens die folgenden Schritte umfasst:
- einen Schritt (300), der darin besteht, einen Kern des Sandwich-Struktur-Materials herzustellen, ausgehend von einem Kern oder Kernen, der oder die in einem Verfahren nach einem der Ansprüche 10, 11 oder 12 erhalten wird bzw. werden, und
- einen Schritt (400), der darin besteht, den im vorhergehenden Schritt erhaltenen Kern mit Außenhäuten zu versehen, die an der unteren Fläche und der oberen Fläche des Kerns fixiert werden, um ein Sandwich-Struktur-Material zu erhalten.

## Claims

1. Sandwich structural material core extending substantially along extension directions (X, Y) and being intended to be contained between a lower surface (2) and an upper surface (3) which are opposite along a thickness direction (Z), the core comprising a three-dimensional periodic array of hollow tubular channels (4) connected to one another, each channel being defined by lateral faces extending along a channel direction (4c) from a lower end (4a) to an upper end (4b) which are situated respectively at the level of the lower (2) and upper (3) surfaces of the said core, the said array comprising at least three channels (4, 5, 6) of which the channel directions (4c, 5c, 6c) are not coplanar, the sandwich structural material core being **characterized in that** the three-dimensional periodic array of hollow tubular channels (4) does not have a zone in which the channel ends (4a, 4b) interpenetrate at the level of the lower (2) and upper (3) surfaces of the core.

2. Core according to Claim 1, in which no pair of channel directions (4c) intersects between the lower (2) and upper (3) surfaces of the sandwich structural material core.

3. Core according to either one of the preceding claims, in which the lower (4a) and upper (4b) ends of the hollow tubular channels (4) are distributed in a uniform manner at the level of the lower (2) and upper (3) surfaces.

4. Core according to any one of the preceding claims, in which each hollow tubular channel (4) has at least one open end among its lower end (4a) and its upper end (4b).

5. Core according to any one of the preceding claims, in which the hollow tubular channels (4) have a polygonal channel cross section, taken transversely to the channel direction (4c).

6. Core according to any one of the preceding claims, in which the lateral faces of each hollow tubular channel (4) extend in a planar manner from the lower end (4a) to the upper end (4b) of the said channel.

7. Core according to any one of the preceding claims, in which the hollow tubular channels (4) comprise ribs (4d) which extend longitudinally from their lower end (4a) to their upper end (4b).

8. Core according to any one of the preceding claims, additionally comprising a plurality of upper planar structures (9) at the level of its upper surface (3) and also a plurality of lower planar structures (10) at the level of its lower surface (2), in which the ends of the hollow tubular channels are connected to one another in groups (8) of three or four by means of the said planar structures, a staggered arrangement of the upper (9) and lower (10) planar structures making it possible to connect each hollow tubular channel (4) to different neighbouring channels at its upper (4b) and lower (4a) ends.

9. Sandwich structural material, **characterized in that** it comprises a core according to any one of the preceding claims and at least one outer skin fixed to at least one of the surfaces of the said core.

10. Method for manufacturing a sandwich structural material core extending substantially along extension directions (X, Y) and being intended to be contained between a lower surface (2) and an upper surface (3) which are opposite along a thickness direction (Z), the method being **characterized in that** it comprises at least the following step (200):
connecting hollow tubular channels (4) to one another in order to form a three-dimensional periodic array of hollow tubular channels (4) comprising at least three channels (4, 5, 6) defined by lateral faces extending along a channel direction (4c, 5c, 6c) from a lower end (4a, 5a, 6a) to an upper end (4b, 5b, 6b), the said ends being situated respectively at the level of the lower (2) and upper (3) surfaces of the said core, the channel directions (4c, 5c, 6c) of the said channels not being coplanar, the three-dimensional periodic array of hollow tubular channels (4b) not having a zone in which the channel ends interpenetrate at the level of the lower (2) and upper (3) surfaces.

11. Method according to Claim 10, in which the connecting step (200) comprises a step of injecting or moulding the said array of hollow tubular channels in a mould.

12. Method according to Claim 10, additionally comprising the step (100) of forming the said hollow tubular channels (4) by cutting sections from a hollow longitudinal tube of constant cross section, and in which the connecting step (200) comprises one and/or other of the following operations:
- a step of fixing the said sections to one another at the level of their upper ends and/or of their lower ends by means of planar structures;
- a step of fixing the said sections to one another at the level of their lateral faces situated between the ends of the said sections.

13. Method of manufacturing a sandwich structural material, **characterized in that** it comprises at least the following steps:
- a step (300) consisting in manufacturing a sandwich structural material core from a core obtained or from cores obtained by means of a method according to one of Claims 10, 11 and 12; and
- a step (400) consisting in providing the core obtained in the preceding step with external skins fixed to the lower and upper surfaces of the said core in order to obtain a sandwich structural material.
